# EUROPÄISCHE PATENTSCHRIFT

(11) **EP 1 534 474 B1**
(45) Veröffentlichungstag und Bekanntmachung des Hinweises auf die Patenterteilung: **21.12.2005**
(21) Anmeldenummer: 03793560.8
(22) Anmeldetag: 05.09.2003
(51) Int. Cl.: B25J 15/06

(54) **ENTNAHMEVORRICHTUNG FÜR SPRITZGIESSTEILE SOWIE VERFAHREN ZUM AUTOMATISCHEN ENTNEHMEN**
REMOVAL DEVICE FOR INJECTION MOULDING PARTS AND METHOD FOR AUTOMATIC REMOVAL
DISPOSITIF DE PRELEVEMENT POUR PIECES MOULEES PAR INJECTION ET PROCEDE DE PRELEVEMENT AUTOMATIQUE

(30) Priorität: 06.09.2002 DE 10241270
(43) Veröffentlichungstag der Anmeldung: 01.06.2005
(73) Patentinhaber: Netstal-Maschinen AG, 8752 Näfels (CH)
(72) Erfinder: SCHIRMER, Roger, CH-8730 Uznach (CH)
(74) Vertreter: Ackermann, Ernst
(86) Internationale Anmeldenummer: PCT/CH2003/000602
(87) Internationale Veröffentlichungsnummer: WO 2004/022287

(56) Entgegenhaltungen:
- EP-A- 1 312 457
- US-A- 4 493 606
- US-A- 5 324 087
- US-A- 5 481 482
- PATENT ABSTRACTS OF JAPAN Bd. 0162, Nr. 74 (M-1267), 19. Juni 1992 (1992-06-19) & JP 4 067924 A (NISSEI PLASTICS IND CO), 3. März 1992 (1992-03-03)

## Beschreibung

### Technisches Gebiet

Die Erfindung betrifft ein Verfahren zum automatischen Entnehmen von Spritzgiessteilen, insbesondere von scheibenförmigen Spritzgiessteilen aus den offenen Formhälften mittels einem Entnahmeroboter und an einem Vakuumsystem angeschlossenen Saugnäpfen, ferner eine Entnahmevorrichtung für Spritzgiessteile, insbesondere für die Entnahme von scheibenförmigen Spritzgiessteilen wie Optical Discs aus den Formhälften mittels Steuermitteln und einem Entnahmeroboter mit Saugnäpfen, welche an ein Vakuumsystem anschliessbar sind.

### Stand der Technik

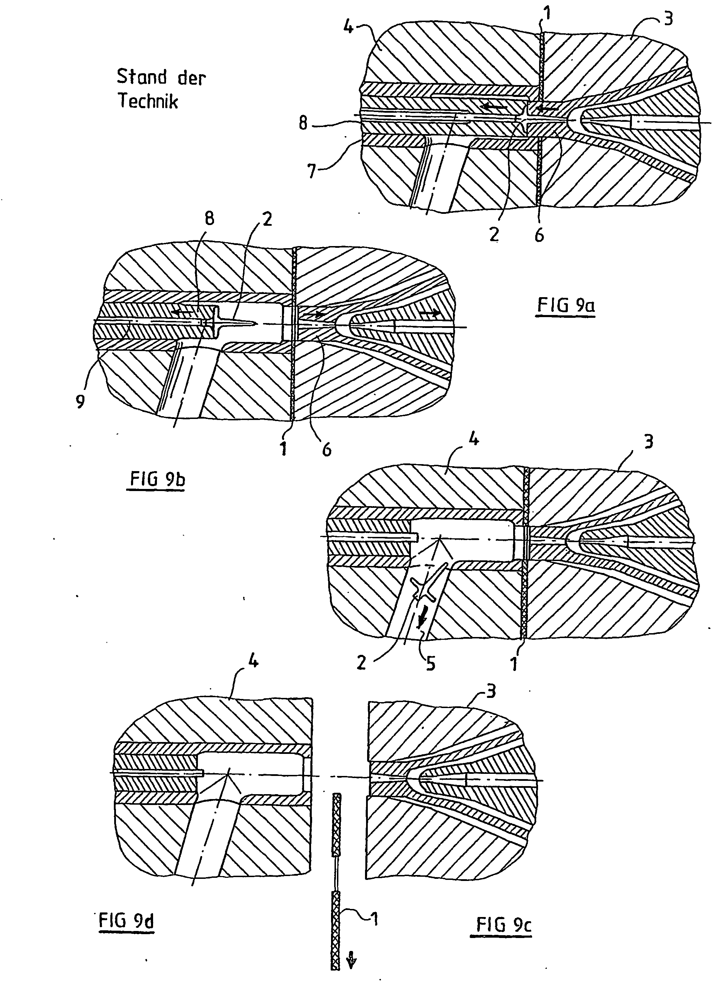

Die Gattung der Spritzgiessmaschinen für die Herstellung von flachen Datenträgern, wie Optical Discs, weist zwei Formhälften auf. Die eine bewegliche, erste Formhälfte wird mittels Antriebssystem gegenüber einer Antriebsträgerplatte für das Formschliessen sowie das Formöffnen bewegt. Ein ganzer Spritzzyklus umfasst das eigentliche Spritzgiessen und Prägen sowie die Entnahme der scheibenförmigen Teile mittels Robotern. Zur Verdeutlichung der Grundproblematik der Produktentname wird auf die Figuren 9a bis 9d Bezug genommen, welche einen älteren Lösungsweg des Standes der Technik darstellen. Im Vordergrund steht die Entnahme des scheibenförmigen Spritzgiessteiles zwischen den beiden geöffneten Formhälften, der beweglichen Formhälfte 3 und der beweglichen Formhälfte 4 sowie die Abführung des Spritzgiessteiles. Gemäss Figur 9d erfolgt die Abführung des scheibenförmigen Spritzgiessteiles nach unten. Die Figur 9c zeigt die getrennte Entnahme des Angusses 2 über einen Abführkanal 5. Die Figur 9a stellt die Situation nach abgeschlossenem Giess- und Prägevorgang dar. Ein bewegbarer Stempel 6 hat das Spritzgiessteil durchstossen und dadurch das zentrale Loch, z.B. einer CD, erzeugt. Das ausgestanzte Mittelteil mit dem Anguss 2 ist auf der Figur 9a nach links in eine matritzenförmige Hülse gestossen und wird von einem Kolben 8 gehalten. Die Figur 9b zeigt als nächsten Schritt die Rückzugbewegung des Kolbens 8 mit dem darin gehaltenen Anguss 2. Der Stempel 6 ist bereits wieder in die Gegenrichtung, vollständig ausserhalb des Spritzgiessteiles 1, zurückgezogen. Innerhalb des Kolbens 8 ist ein Ausstosserbolzen 9, der nach vollständigem Rückzug des Kolbens 8 den Anguss mit mechanischer Kraft ausstösst und abwirft, wie in der Figur 9c dargestellt ist. Diese Lösung ist, soweit es den Anguss betrifft, sehr vorteilhaft. Im traditionellen Stand der Technik werden die CD's mittels Robotern und Saugnäpfen aus den geöffneten Formen entnommen und mit grösstmöglicher Geschwindigkeit der weiteren Verarbeitung übergeben. In der Praxis können dabei verschiedene Probleme auftreten:
- Bei der Übernahme einer fertigen CD durch die Saugnäpfe können nicht vorhersehbare Störungen auftreten, z.B. durch mangelhaftes Anliegen der CD an die Saugnäpfe, was einen Unterbruch der Produktion verursachen kann.
- Für die Beschleunigung des Roboterarmes bzw. die Zeitdauer des ganzen Entnahmevorganges sind Grenzen gesetzt, wenn z.B. durch zu geringes Vakuum ungenügende Haftkräfte wirksam sind.
- Die genannten Problem-Punkte gelten auch für den Anguss, sofern dieser gleicherweise mit einem Saugnapf entnommen wird.
Wenn im Stand der Technik, wie in der US-A-5.324.087, die Sicherheit der Entnahme mit einem fixen Schwellwert zu hoch gewertet wurde, führte dies oft zu Sicherheitsabschaltungen, welche in vielen Fällen gar nicht notwendig gewesen wären.
Der Erfindung wurde nun die Aufgabe gestellt, ein Verfahren und eine Entnahmevorrichtung zu entwickeln, welche eine kurze Entnahmezeit, möglichst ohne Störungen, mit einer sehr hohen Betriebssicherheit aber auch ohne unrötige Sicherheitsabschaltungen mittels Entnahmerobotern und Saugnäpfen zulassen.

### Darstellung der Erfindung

Das erfindungsgemässe Verfahren ist dadurch gekennzeichnet, dass für die Spritzgiessteile-Entnahme auf Grund des verfügbaren Systemvakuums ein Druckschalt Schwellwert oder ein Druckschaltprofit für das in Saugnapfnähe sich einstellende Vakuum bei der Übernahme der Spritzgiessteile durch den Entnahmeroboter bestimmt und der Druckschaltschwellwert bzw- das Druckschaltprofil auf Grund des jeweils momentanen Unterdruckes während jeder Spritzgiessteile-Entnahme kontinuierlich adaptiert wird.

Die erfindungsgemässe Entnahmevorrichtung ist dadurch gekennzeichnet, dass das Vakuumsystem in Verbrauchernähe, insbesondere im Produktionssystem integriert wenigstens einen Vakuumspeicher bzw. Vakuumtank und Vakuumsensor-mittel aufweist, wobei die Saugnäpfe über ein steuerbares Ventil mit dem Vakuumtank verbindbar und die Bewegungen des Entnahmeroboters über die Vakuumsensormittel überwachbar sind, wobei mittels der Steuermittel ein Druckschaltschwellwert bzw. ein Druckschaltprofil auf Grund des jeweils herrschenden Unterdruckes während jeder Spritzgiessteile-Entnahme adaptierbar ist.

Grössere Abklärungen bei Saugnapflösungen des Standes der Technik haben ergeben, dass eine zentrale Störquelle das Vakuumsystem ist. Wiederholte Versuche im Labor brachten keinen Aufschluss, weil in einem Labor meistens optimale und vor allem konstante Bedingungen gegeben sind. Der Labor-Vakuumerzeuger ist in Maschinennähe angeordnet. Die Zuführleitung ist somit kurz und normalerweise gross genug dimensioniert. In der Kundenpraxis ist der Vakuumerzeuger dagegen oft weit weg und hat viele Verbraucherstellen. Die Vakuum-Zuführleitung ist manchmal zu klein im Querschnitt. Wenn der Unterdruck, z.B. durch andere am Vakuumsystem angeschlossene Verbraucher etwas reduziert wird, können sich bei ungünstigen Bedingungen die Verhältnisse zwischen Saugnäpfen und Spritzgiessteil derart verschlechtern, dass die Übernahme durch den Roboter mangelhaft oder gar nicht erfolgt.

Von den Erfindern ist erkannt worden, dass für die extrem hohe Leistungsfähigkeit von Spritzgiessmaschinen und bei den schnellen Bewegungsabläufen mit Taktfrequenzen für je einen ganzen Spritzzyklus im Sekundenbereich vier Probleme im Zentrum sind:
- Jede Teilfunktion muss mit dem kleinstmöglichen Zeitaufwand durchgeführt werden. Hier ist es das Problem der Geschwindigkeit, möglichst ohne Totzeiten.
- Das Problem der Überwachung von jeder Bewegung, der Bewegung des Entnahmeroboters wie der Bewegung der Spritzgiessteile. Es muss sichergestellt werden, dass jedes Spritzgiessteil ordnungsgemäss entnommen wird.
- Das Problem des Maschinenschutzes. Es muss sichergestellt werden, dass bei jedwelcher Fehlfunktion im Rahmen der Spritzgiessteilentnahme jede anschliessende Bewegung, welche zu Schäden führen könnte, vermieden wird.
- Jedes Sicherheitsdispositiv, das zwar wirksam jeden möglichen Folgeschaden ausschliesst, kann insofern zu grossen Nachteilen führen, als viel zu oft, d.h. mehr als notwendig, die Produktion unterbrochen wird. Dies bedeutet, dass ein Optimum zwischen Maschinenschutz und Sicherheitsabschaltungen gefunden werden muss.

Die neue Erfindung schlägt vor, wenigstens einen Parameter luftseititg, nämlich einen wirksamen Druckschalt-Schwellwert im Vakuumsystem für das Weiterschalten der Bewegungen des Entnahmeroboters zu bestimmen. Im Kern schlägt die neue Lösung vor, das momentan wirksame Vakuum zu messen, einen dazu optimalen Schaltschwellwert festzulegen und die eigentliche Schaltfunktion für die nächste Bewegung nur bei Erreichen des Schalt-Schwellwertes freizugeben. Eine Analyse aller Funktionen hat ergeben, dass gestützt auf die wirksamen Vakuumverhältnisse, je nach der Praxissituation, zwei Parameter im Vordergrund sein können:
- Stop jeder weiteren Bewegung der Maschine, soweit ein wirkliches Schadenrisiko besteht, wenn im Vakuumsystem ein minimales Vakuum nicht vorhanden ist.
- Bewegungsfreigabe für den Entnahmeroboter und Vakuumieren der Saugnäpfe, Definieren eines je optimalen Druckschalt-Schwellwertes.
- Wichtig ist dabei, dass entsprechend dem je momentan wirksamen Systemvakuum der vorbestimmte Druckschalt-Schwellwert für das Vakuum im Saugnapfbereich am Ende der Übernahme der Spritzgiessteile durch die Saugnäpfe über entsprechende Vakuumsensormittel überprüft und erst bei Einhalten des Schwellwertes die weiteren Bewegung des Roboters freigegeben wird.

Die neue Lösung bietet ganz überraschende Vorteile im Hinblick auf alle zur Zeit bekannten Störmöglichkeiten. Durch die zweistufige Kontrolle der Vakuumverhältnisse können alle Störungen aus dem Vakuumsystem soweit ausgeschlossen werden, dass keine Maschinenstillstände und/oder Maschinenschäden entstehen. Sehr wichtig ist der Aspekte der sauberen mechanischen Übernahme bzw. Übergabe der Spritzgiessteile aus der Form an den Entnahmeroboter. Es wird über die Vakuumverhältnisse sofort festgestellt, wenn sich das Spritzgiessteil nicht aus der Form löst, das Teil mangelhaft an den Saugnäpfen anliegt, wenn z.B. die Sauger an den Lippen durch Abnützen mangelhaft geworden sind. Mit dem Druckschalt-Schwehwert kann die Zeitspanne von der Annäherung der Saugnäpfe an die Spritzgiessteile bis zur vollständigen Haftung an den Saugnäpfen über die Vakuumkontrolle in Saugnapfnähe festgestellt werden. Dauert die Zeitspanne zu lange, muss auf eine Fehlfunktion geschlossen werden. Ein Ziel der neuen Lösung ist eine möglichst steile Vakuumrampe, weil damit die Übernahme der Spritzgiessteile in der kürzest möglichen Zeit stattfindet. Die Spritzgiessteileentnahme kann mit der neuen Lösung sowohl in Bezug auf Geschwindigkeit wie auch auf die Funktionssicherheit optimiert werden.

Die neue Erfindung schlägt vor, vor Beginn der Entnahmebewegungen das momentan verfügbare Vakuum festzustellen und bei genügendem System-Vakuum gleichsam im Sinne einer Zielvorgabe einen Druckschalt-Schwellwert in Saufnapfnähe zu definieren, die Bewegung des Roboters bis zur Übernahme der Spritzgiessteile freizugeben und erst bei Erreichen des Druckschaltschwellwertes bei vollständiger Übernahme der Spritzgiessteile durch die Saugnäpfe die eigentliche Entnahme der Teile durchzuführen. Während dem Entnahmevorgang wird das ordnungsgemässe Halten der Teile laufend geprüft.

Die ersten Praxisversuche haben gezeigt, dass bei bis zu 200'000 Giesszyklen keine Störungen für die Teileentnahme auftraten. Dies gegenüber einem Extremfall des Standes der Technik, bei dem pro 1'000 Schüsse 1 bis 2 Störungen auftraten.
Die neue Lösung erlaubt eine ganze Anzahl besonders vorteilhafter Ausgestaltungen. Es wird dazu auf die Ansprüche 2 bis 10 sowie 12 bis 19 Bezug genommen.

Das neue Verfahren schlägt einen kleinen Zusatz-Vakuumspeicher in Verbrauchernähe vor. Der Zusatz-Vakuumspeicher hat den grossen Vorteil, dass für die kurze Phase der Spritzgiessteilübernahme durch die Saugnäpfe und die unmittelbar anschliessende Ausfahrbewegung des Roboters ein entsprechend grosser Vakuum-Speicher vor Ort zur Verfügung steht. Die Übernahme erfolgt unter definierten Bedingungen, unab-hängig allfällig momentan schwankender Systemvakuumverhältnisse. Die neue Lösung erlaubt, ein Arbeitsspeicher mit Einschluss aller Leitungen und Ventile maschinenseitig im Sinne von optimierten Baugruppen dem Kunden als Teil der Maschine mitzuliefern. Damit verursachen Vakuum-Schwankungen in einem relativ grossen Bereich keine Störungen mehr in Bezug auf die Produktentnahme aus den Formhälften.

Aus dem Zusammenwirken der beschriebenen Parameter, nämlich eines Vakuum-grenzwertes, der jeweiligen Festlegung und Kontrolle eines Druckschaltschwellwertes in Saugnapfnähe sowie der Bereitstellung eines Vorort-Vakuumspeichers können die Teile mit der grösstmöglichen Sicherheit und trotzdem in der kürzest möglichen Zeit entnommen werden.

Vorzugsweise weist der Entnahmeroboter Saugnäpfe für die scheibenförmigen Teile (Disc-Saugnäpfe), insbesondere für Optical Discs, sowie wenigstens einen Anguss-Saugnapf auf, wobei alle Saugnäpfe für die Übernahme mit dem Vakuumtank verbunden werden. Vorteilhaft ist dabei, wenn die Disc-Saugnäpfe sowie der Anguss-Saugnapf durch je getrennte Leitungen mit dem Vakuumtank über steuerbare Ventile verbunden werden. Bereits die ersten Versuche mit der neuen Lösung haben gezeigt, dass ein Teil des Erfolgsgeheimnisses in der Schaffung einer steilen Vakuum-"Rampe" während der kritischen Phase der Übernahme der Discs durch die Saugnäpfe für das Verhältnis Unterdruck über der Zeit im Wirkbereich der Saugnäpfe liegt. Die getrennten Leitungen erlauben, sowohl für das scheibenförmige Teil wie für den Anguss beste Bedingungen zu schaffen. Es wäre auch denkbar, den Vakuumtank über steuerbare Ventile nur für die Phase der Produktentnahme im Sinne eines Zusatz-Vakuumspeichers jeweils dazuzuschalten, so dass nur für diese kritische Zeit zwei Vakuumquellen in Aktion treten. Zumindest nach dem momentanen Stand genügt es, wenn ein oder zwei Vakuumtanks möglichst nahe an den Verbraucherstellen an das Vakuumsystem dauernd angeschlossen bleiben und damit mit dem momentan im System herrschenden Unterdruck beaufschlagt sind. Die Anordnung von getrennten Leitungen mit je eigenen steuerbaren Ventilen erlaubt einen gezielten zeitlichen Start für die beiden Ansaug- bzw. Entnahmefunktionen, für die Optical Disc wie für den Anguss. Die beiden können im Bereich von Millisekunden verschoben werden, so dass einem Teil der Vorzug gegeben werden kann.

Die Anforderungen für die Optical Disc und für den Anguss sind in zwei Punkten grundverschieden. Der Anguss ist Abfall, so dass eine Beschädigung irrelevant ist. Der Anguss ist kleiner und gegebenenfalls schwieriger zu entnehmen. Die Optical Disc ist in Bezug auf mechanische Beschädigung sehr heikel, kann jedoch ohne Schwierigkeiten den Formen entnommen werden. Gegebenenfalls ist es vorteilhaft, den Anguss rein mechanisch zu entnehmen. Ein sehr wichtiger Punkt bei der neuen Lösung liegt darin, dass der Druckverlauf wenigstens in der Phase der Entnahme detektiert wird zur Überwachung der tatsächlich erfolgten Übernahme des Giessteils durch die Saugnäpfe. Vor Beginn der Übernahmephase der Spritzgiessteile werden die Saugnäpfe mit dem Vakuumsystem verbunden, so dass die Saugnäpfe Luft aus dem Freien ansaugen. Der beste Zeitpunkt dafür ist, kurz bevor der Entnahmeroboter zwischen den offenen Formhälften einfährt. Vor der Näherung von Spritzgiessteil und Saugnapf ist das wirksame Vakuum vor dem Saugnapf extrem klein, da Luft aus dem Freien angesaugt wird. Während dem Ansaugen der Spritzgiessteile schliesst sich der Spalt zwischen Saugnapf und Spritzgiessteil, und das wirksame Vakuum baut sich beinahe schlagartig auf. Am Ende dieses Vorganges liegt das Spritzgiessteil vollständig an den Saugnapf an. Die Folge ist, dass das auf das Spritzgiessteil wirksame Vakuum im Saugnapf das vom Systemdruck her mögliche Maximum annähert, ohne diesen vollständig zu erreichen. Gemäss der neuen Lösung könnte auch das Profil der Vakuumrampe messtechnisch erfasst und mit einem vorbestimmten Druckschaltprofil verglichen werden. Bei Abweichungen kann durch entsprechende Solf-/Ist-Überwachfunktion, z.B. eine Sicherheitsabschaltung für das Formschliessen, ausgelöst werden.

Für die Phase der Spritzgiessteilübenahme und Ausfahren sind drei Zustände möglich:
1. Das Systemvakuum ist über die Zeitspanne der Entnahme konstant und genügend.
2. Das Systemvakuum schwankt während der Entnahme stark. Hier sichert das vorort "gespeicherte" Vakuum das automatische Entnehmen. Die Entnahme kann rasch und sicher erfolgen.
3. Das Systemvakuum bricht aus irgendwelchen Gründen während dem Entnahmevorgang zusammen. Mit dem dauernd überwachten Vakuum-Grenzwert kann die Entnahmefunktion im Millisekundenbereich gestoppt und Maschinenschäden verhindert werden.

Der Vakuumtank hat eine Doppelfunktion. Einerseits bietet er einen Vakuumzwischenspeicher und unterstützt die Vakuumwirkung. Zum Zweiten bietet der Vakuumtank für die extrem kurze Zeitspanne der Spritzgiessteileentnahme eine so grosse Reserve, dass eine gleichzeitige Vakuumreduktion im Vakuumsystem die Entnahmefunktion über einen grossen Bereich nahezu unbeeinflusst lässt.

Bei Anwendungen, in denen ein optimales Vakuumsystem bereits vorhanden ist, kann auf einen zusätzlichen Vakuumtank verzichtet werden. In diesem Fall ist jedoch gemäss der neuen Lösung eine Drucküberwachung zwingend erforderlich. Die neue Lösung gestattet entweder, die erforderliche Betriebssicherheit durch einen Zusatz-Vakuumtank, eine zusätzliche Drucküberwachung oder beides vorzusehen. Die Disc-Saugnäpfe werden an einem Übernahmekopf des Entnahmeroboters etwa kreisförmig angeordnet und sind gemeinsam über eine eigene Vakuum-Verbindungsleitung sowie einem steuerbaren Ventil direkt mit dem Zusatz-Vakuumtank verbindbar. Innerhalb der kreisförmig angeordneten Disc-Saugnäpfe ist wenigstens ein Anguss-Saugnapf angeordnet, welcher ebenfalls über ein steuerbares Ventil mit dem Zusatz-Vakuumtank verbindbar ist. Vorteilhafterweise werden für die neue Lösung der Vakuumtank und die Ventilgruppen als eigenständige, maschinenseitig angeordnete Baugruppe ausgebildet, mit einer Anschlussleitung an das Vakuumsystem. Es versteht sich, dass alle funktionswesentlichen Teile, vom Vakuumtank bis zu den Saugnäpfen, optimal dimensioniert werden können und damit eine bauliche Standardisierung für die Spritzgiessteileentnahme ergeben. Die Anschlussleitung kann für die ganze Zeitdauer der Entnahme sowohl zu dem Zusatz-Vakuumtank wie auch von den Verbindungsleitungen zu den Saugnäpfen ständig offen bleiben. Nach erfolgter Entnahme der Spritzgiessteile und Ausfahren des Roboterarmes bis zu einer Weitergabestelle muss das Vakuum an den Saugnäpfen sichergestellt werden. Für die Weitergabe der Spritzgiessteile müssen diese von den Saugnäpfen gelöst werden. Für die scheibenförmigen Spritzgiessteile kann in der Vakuum-Verbindungsleitung zwischen dem steuerbaren Ventil und den Disc-Saugnäpfen ein weiteres steuerbares Einströmventil für Umgebungsluft angeordnet werden für den Abwurf der Discs mittels Schwerkraft.

Wegen den kleinen Abmessungen des Angusses und der schlechteren Saugnapfwirkung wird in der Vakuumverbindungsleitung zwischen dem steuerbaren Ventil und dem Anguss-Saugnapf ein steuerbares Ventil für das Abblasen des Angusses angeordnet. Hier erfolgt der Abwurf mit einem Druckluftstoss. Für eine Stabilisierung der Druckverhältnisse ist es ferner möglich, in jeder Verbindungsleitung für die Saugnäpfe ein Drosselventil vorzusehen.

Die neue Lösung weist eine Steuereinrichtung auf, über welche für jeden Zyklus die einzelnen Blas- und Saugzyklen koordiniert und optimiert mit dem Formöffnen und dem Formschliessen steuerbar sind. Ferner weist sie Drucksensormittel auf zur Überwachung der Druckverhältnisse in Saugnapfnähe, insbesondere während der Entnahme und/oder des Druckverlaufes in dem Zusatz-Vakuumtank.

Die Steuereinrichtung weist Programmteile auf, über welche jeder Entnahmevorgang entweder durch Druckschalt-Schwellwerte oder Druckschaltprofile überwacht wird, derart, dass bei Störungen, je nach Art der Störung, ein Alarm ausgelöst bzw. über Anzeigemittel angezeigt und z.B. im Falle des Hängenbleibens eines Spritzgiessteiles in den Formhälften das Formschliessen sofort gestoppt wird. Nach den bisherigen Versuchen soll der Zusatz-Vakuumtank wenigstens 5 dm³, vorzugsweise etwa 10 dm³ bis 50 dm³ Fassungsvermögen aufweisen. Er wird besonders vorzugsweise in Elementen des Maschinenbettes der Spritzgiessmaschine angeordnet. Alle Vakuumverbraucher in dem Bereich der Formen bzw. der Entnahme werden an den Zusatz-Vakuumtank angeschlossen. Es ist ferner möglich, zwei oder mehr Zusatztanks vorzusehen, welche einzeln oder parallel zugeschaltet sein können.

### Kurze Beschreibung der Erfindung

Die neue Lösung wird nun an Hand einiger Ausführungsbeispiele mit weiteren Einzelheiten erläutert. Es zeigen:
- die Figur 1: den ganzen Formbereich mit geöffneten Formhälften;
- die Figur 2: die Einfahrbewegung des Roboterarmes in die geöffnete Form;
- die Figur 3: die Ausfahrbewegung des Roboterarmes mit den Spritzgiessteilen;
- die Figur 4: ein Grundschema für die Kernkomponenten der neuen Lösung;
- die Figur 5: eine Roboterbaugruppe;
- die Figur 6a: einen Schnitt B-B der Figur 6b;
- die Figur 6b: eine Sicht auf die Saugnäpfe des Roboter-Entnahmekopfes;
- die Figur 6c: eine Ansicht gemäss Pfeil D der Figur 6a;
- die Figur 6d: eine Ansicht gemäss Pfeil E der Figur 6a;
- die Figur 7: ein Schema für die neue Lösung mit Vakuumtank;
- die Figur 8a: die Druckverlaufkurven bei der Spritzgiessteilentnahme mit einer Vakuumversorgung ohne Speicher (Vakuumtank);
- die Figur 8b: die Druckverlaufkurven mit Speicher bzw. Vakuumtank;
- die Figur 8c: eine Ausschnittvergrösserung der Figur 8a;
- die Figur 8d: eine Ausschnittvergrösserung der Figur 8b;
- die Figuren 9a bis 9d: verschiedene Phasen der Spritzgiessteileentnahme an Hand einer Lösung des Standes der Technik.

### Wege und Ausführung der Erfindung

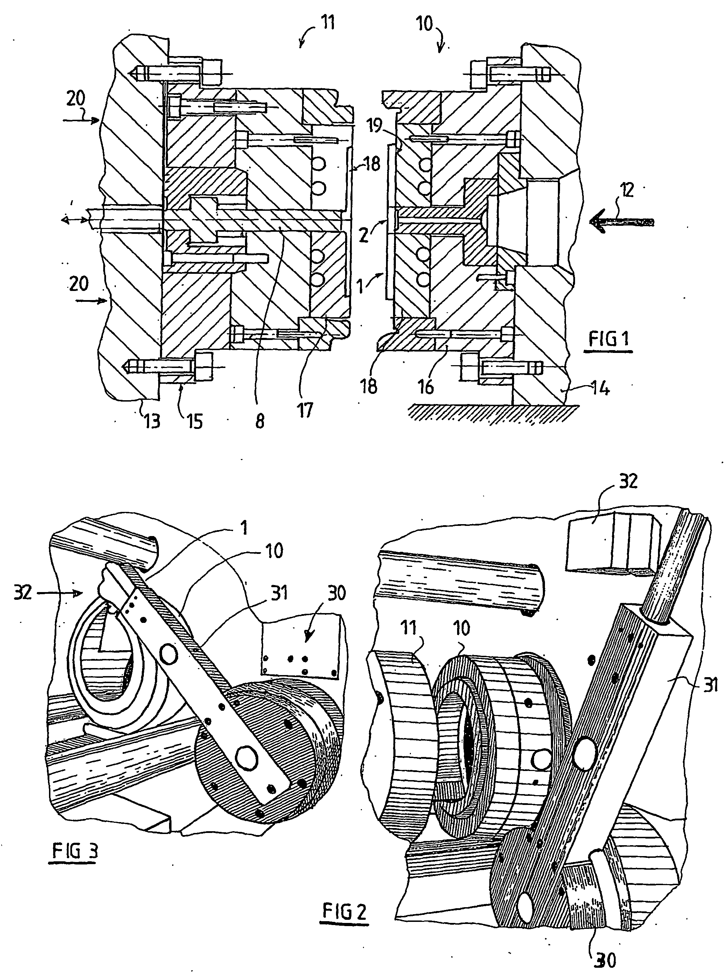

Die Figur 1 zeigt einen Schnitt durch die zwei geöffneten Formseiten einer Spritzgiessform für die Herstellung von CD's. Auf der rechten Bildseite ist die feste Formhälfte 10, auf der linken Bildseite die bewegliche Formhälfte 11. Ein Spritzkopf ist symbolisch mit einem Doppelpfeil 12 bezeichnet. Das flache Spritzgiessteil 1 ist noch in der Form. Ausstosshilfen, wie Luft oder mechanische Hilfen, sind nicht dargestellt. Der Anguss 2 ist bereits von dem flachen Spritzgiessteil getrennt und befindet sich noch im Angusskanal. Jede der beiden Formseiten weist eine Grundplatte 13 resp. 14, eine erste Abstützplatte 15 resp. 16 sowie eine Formplatte 17 resp. 18 auf. Innerhalb der Formplatten 17 resp. 18 ist je ein Stamper 19 eingelegt. Mit den Pfeilen 20 ist die Prägebewegung bzw. der Aufbau der Prägekraft der beweglichen Formhälfte 11 angedeutet. Der Spritz- und Prägevorgang wird als bekannt vorausgesetzt.

Die Figur 2 zeigt den Beginn der Einfahrbewegung des Roboterarmes 31 des Entnahmeroboters 30 mit einem Übernahmekopf 32 in der höchsten Stellung. Die beiden Formhälften 10 und 11 sind in geöffnetem Zustand entsprechend der Figur 1.

Die Figur 3 zeigt die Ausfahrbewegung des Roboterarmes 31, wobei der Übernahmekopf 32 eine CD hält.

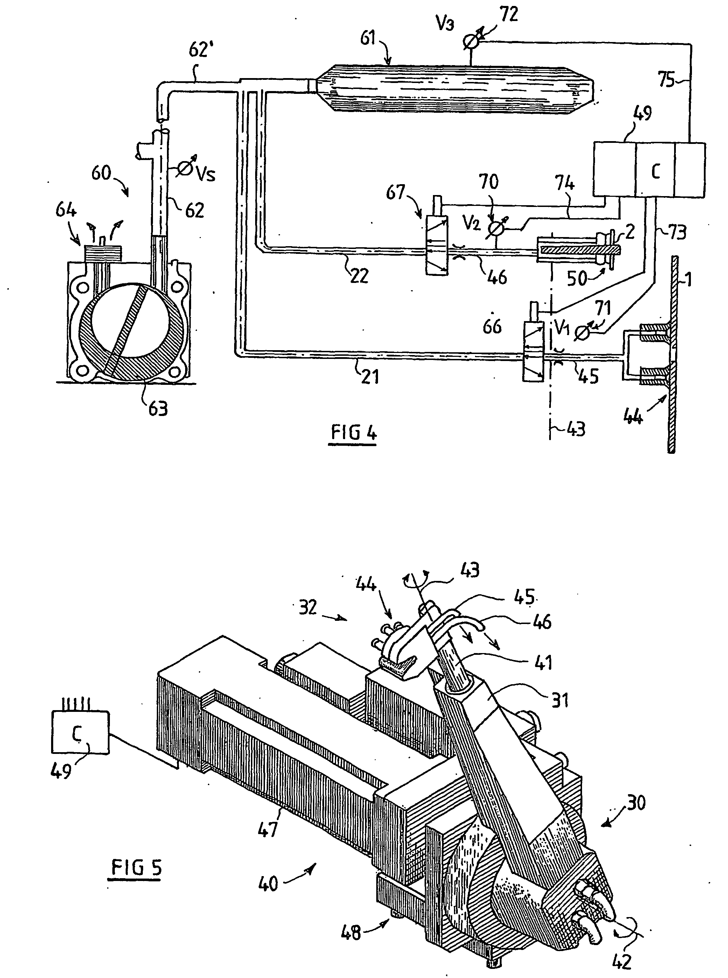

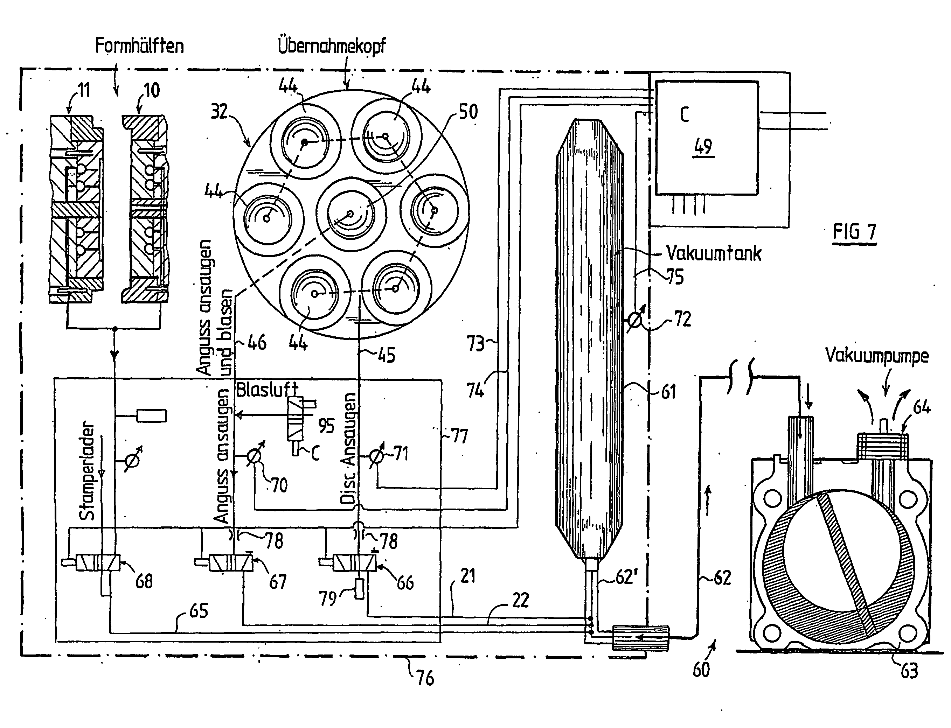

Die Figur 4 zeigt schematisch eine Übersicht über eine besonders vorteilhafte Ausgestaltung der neuen Lösung mit einem Vakuumsystem 60 sowie einem zusätzlichen Vakuumtank 61. Auf das Vakuumsystem wird nicht näher eingegangen. Die Luft wird vereinfacht über eine grossquerschnitte Vakuumleitung 62 in eine Vakuumpumpe 63 angesaugt und über Ausblasstutzen 64 an die frei Luft abgeblasen. Schematisch ist die Vakuumleitung 62 über ein Teilstück 62' einerseits direkt mit dem Vakuumtank 61 und anderseits über Verbindungsleitungen 21, 22 mit den Verbraucherstellen verbunden. An jeder der Verbindungsleitungen 21 und 22 ist ein gesteuertes Ventil 66 bzw. 67 angeordnet, wobei die Steuerung aller Ventile über den Maschinenrechner 49, über entsprechende Steuerleitungen erfolgt. Das letzte Teilstück der Vakuumverbindung an die Disc-Saugnäpfe 44 sowie den Angusssaugnapf 50 wird über Vakuumleitungsstücke 45 und 46 hergestellt. Sowohl in den beiden Vakuumleitungsstücken 45 und 46 wie auch an dem Vakuumtank 61 ist je ein Vakuumsensor 70, 71, 72 angebracht, welche über Steuerleitungen 73, 74 und 75 ebenfalls mit dem Maschinenrechner 49 verbunden sind. Ziel der übergeordneten Steuerung ist neben der Gewährleistung aller Ablauf- und Sicherheitsfunktionen auch ein ökonomischer Betrieb. Das Vakuum wird nur für die Zeitdauer zugeschaltet, während der Bedarf besteht, was mit der Steuerung der Ventile 66, 67 und 68 (Figur 7) erfolgt.

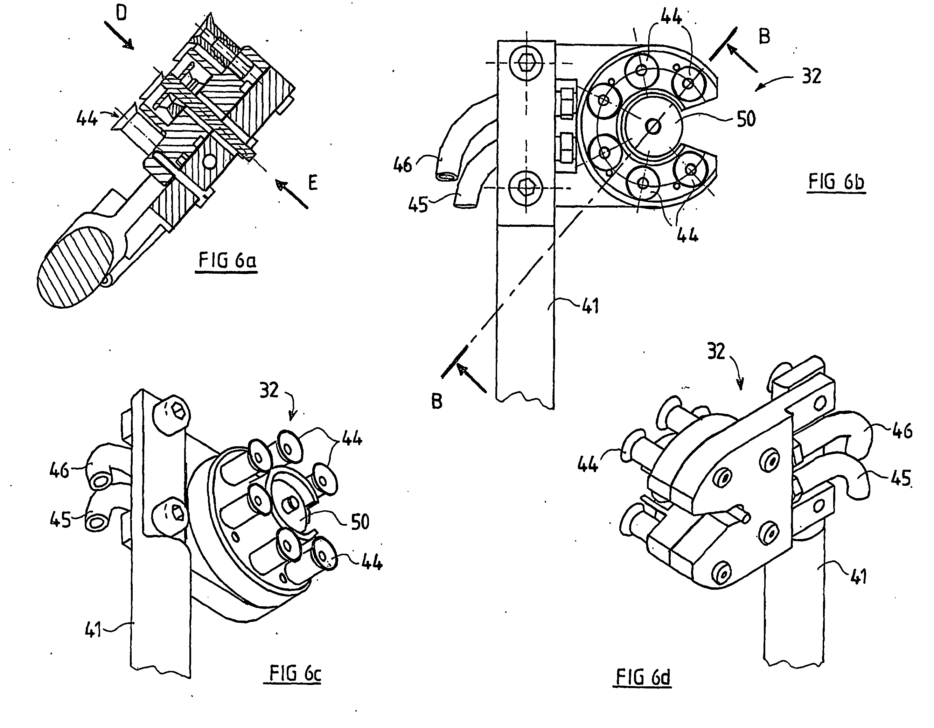

In der Figur 5 ist eine ganze Roboterbaugruppe 40 dargestellt, wobei rechts im Bild der Entnahmeroboter 30 mit Roboterarm 31 sowie Übernahmekopf 32 dargestellt ist. Der Übernahmekopf 32 ist an einer drehbaren Achse 41 gelagert, so dass dieser neben der Verschwenkbewegung um eine Antriebsachse 42 auch um die Achse 43 der drehbaren Achse 41 bewegbar ist. Am Übernahmekopf 32 sind noch erkennbar einige Saugnäpfe 44 und je eine Vakuumleitungsstück 45, 46 für die Verbindung der Saugnäpfe mit dem Vakuum-System angebracht. Die Roboterbaugruppe 40 weist einen Antriebsmotor bzw. Servomotor 47 sowie ein Getriebe 48 auf. Die Steuerung aller Bewegungen des Übernahmekopfes 32 erfolgt über einen Maschinenrechner 49.

Die Figur 6b ist eine Ansicht D der Figur 6a und die Figur 6a ein Schnitt B - B der Figur 6b. Sechs Disc-Saugnäpfe 44 sind kreisförmig am Übenahmekopf 32 angeordnet. Im Zentrum der 6 Disc-Saugnäpfe 44 ist ein Angusssaugnapf 50. Die Angusssaugnäpfe 44 sind gemeinsam an das Vakuumleitungsstück 45 und der einzelne Angusssaugnapf 50 an das Vakuumleitungsstück 46 angeschlossen. Die Figuren 6c und 6d zeigen je die Vorder- und die Rückseite des Übernahmekopfes 32.

Die Figur 7 zeigt schematisch die wichtigsten Komponenten der neuen Lösung, entsprechend der Figur 4. Mit einem strichpunktierten Viereck sind die Komponenten eingerahmt, welche eine maschinenseitige Baugruppe 76 umfassen. Der Rahmen 77 umfasst eine Ventilbaugruppe, welche ebenfalls maschinenseitig angeordnet ist. Demgegenüber gehört die Vakuumpumpe 63 in der Regel nicht direkt zu einer Spritzgiessmaschine sondern stellt mit den Leitungen 62 das Vakuumsystem dar. Die Figur 7 zeigt eine je spezifische Ausgestaltung. Der Anguss wird über gesteuertes Zuschalten von Blasluft über das Druckluftventil 95 gleichsam durch einen Blasluftstoss um den Saugnapf abgespuckt. Der Disc wird dagegen durch eine Umschaltung des Ventiles 66 und dem Einströmen von Umgebungsluft in das Vakuumleitungsstück 45 fallen gelassen. Das Ventil gibt dazu die Ansaugöffnung 79 frei. In beiden Vakuumleitungsstücken 45, 46 ist je eine Drossel 78 angebracht. Damit kann erreicht werden, dass von Beginn der Ansaugfunktion direkt nach Öffnen der Vakuumverbindung über Ventile 66, 67 die Vakuumverbindungsleitungsstücke 45, 46 ein relativ geringes Vakuum haben. Damit sind die Startbedingungen für die steuertechnische Beherrschung optimaler. Die Vakuumrampe wird dadurch viel höher, bzw. fast doppelt so hoch wie ohne Drossel.

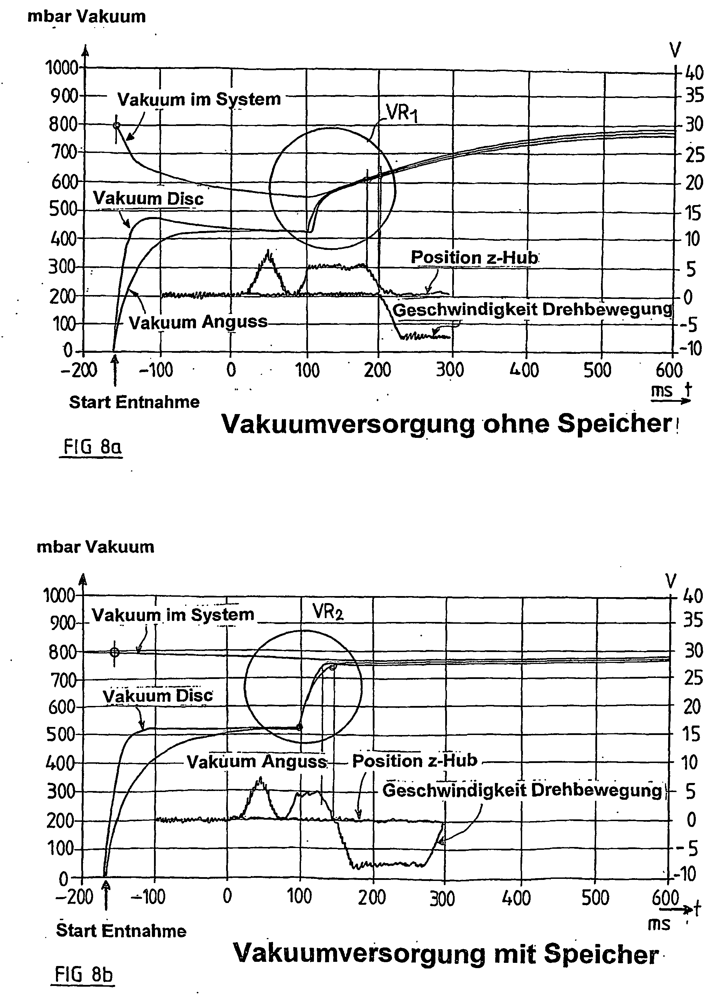

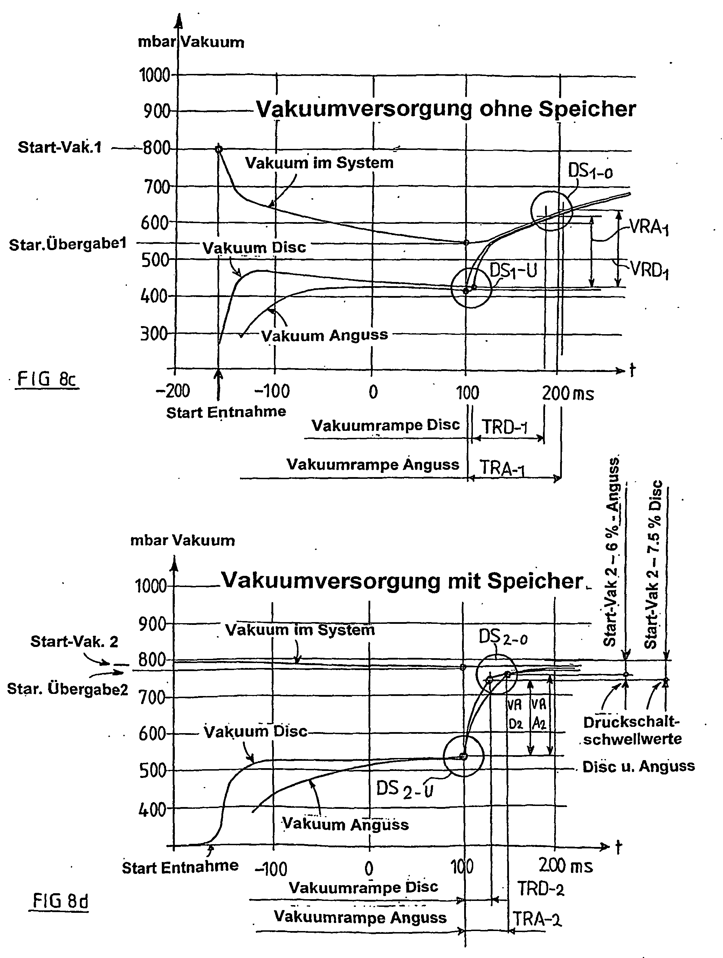

Eine zentrale Funktion der neuen Lösung wird mit den Figuren 8a bis 8d an Hand je einer Lösung mit und ohne Vakuumspeicher erklärt. Im Feld treten, wie in der Folge dargestellt wird, mehr als erwünscht Entnahmeprobleme auf, welche meistens mit einer ungenügenden Vakuumversorung zusammenhängen. Eine mögliche Ursache ist beispielsweise das minimal vorgeschriebene Vakuum von 750 mbar, welcher aufgrund ungenügender Leistungsfähigkeit der Vakuumpumpe oder wegen grösseren Lecks nicht erreicht wird. Die Anschlussleitungen sind zu lang und besitzen einen ungenügenden Querschnitt. Da die Vakuum-Installation grundsätzlich Sache des Kunden und nicht des Maschinenherstellers ist, kann diesbezüglich nur bedingt Einfluss genommen werden. Der Vakuumbedarf ist im Zyklusverlauf relativ grossen Schwankungen unterworfen. Insbesondere zum Zeitpunkt des Ansaugens von Disc und Anguss ergibt sich eine "Verbrauchsspitze". Es wurde untersucht, inwieweit ein Vakuumspeicher diese "Verbrauchsspitzen" abfedern und damit die Entnahmeprobleme im Feld entschärfen kann. Versuchsweise wurde dazu ein Speicher mit 10 Litern Inhalt an der Maschine angebracht und über eine absperrbare, kurze Schlauchverbindung mit den Vakuumventilen verbunden. Verschiedene Verbraucherstellen sind an ein Druckluftsystem angeschlossen. Es handelt sich dabei um drei mechanische Funktionen: Ausstosserstift vor und zurück, Stanzer vor und zurück sowie Auswerfer vor und zurück. Für die Blaslusft sind die wichtigsten drei Verbraucher:
- Blasluft Bewegungsseite
- Blasluft für die Düsenseite
- Anguss Abblasen.

Jede der genannten Funktionen wird von dem Maschinenrechner über ein Steuerventil im erforderlichen Takt gesteuert. Das Druckluftsystem wird von einer zentralen Druckluftversorgung versorgt. Die Druckluftversorgung ist in der Regel der weniger kritische Teil. Wichtig ist die vollständige Koordination der Vakuum- sowie der Blasluftfunktionen, welche im Bereich von Millisekunden optimiert werden muss.

Die Figur 8a zeigt die Verhältnisse ohne zusätzlichen Vakuumtank bzw. Speicher. Beim Einschalten von "Vakuum Disc" und "Vakuum Anguss" bricht das Vakuum im System um rund 250mbar ein. Nachdem Disc und Anguss angesaugt sind, bildet sich dieser Einbruch zurück und erreicht innerhalb von rund 300ms wieder einen stationären Zustand. Die Figur 8b zeigt die gleiche Aufzeichnung, jedoch mit einem zusätzlichen Vorort-Vakuum-Speicher. Der Druckeinbruch beim Einschalten der Ventile ist kaum mehr feststellbar. Der Transient nach dem Ansaugen von Disc und Anguss ist deutlich steiler geworden und bewirkt damit eine Reduktion der Entnahmezeit von durchschnittlich 40 ms. Andererseits werden Disc und Anguss beim Zurückfahren des z-Hubs bzw. beim Start der Ausfahrbewegung mit rund 15% höherer Kraft gehalten. Für die Kombination von optimaler Dynamik mit guter Zugänglichkeit bzw. einfacher Bedienung wird eine Lösung mit Drucksensoren vorgeschlagen. Solche Sensoren bieten ein relativ hochauflösendes Analogsignal, welches in der Steuerung erfasst und ausgewertet werden kann. Die jeweils ermittelte Druck-Schaltschwelle kann direkt am Bildschirm angezeigt werden. Nicht zuletzt ergeben sich mit einer Sensor-Lösung Vorteile im Verlgeich zu dezentraler Intelligenz. Durch den Einbau eines verbrauchernahe angeordneten Vakuum-Vorort-Speichers kann insbesondere bei mangelhafter Vakuumversorgung die Entnahme sicherer und die Entnahmezeit deutlich reduziert werden. Mit der höheren Dynamik im Vakuumaufbau erhöht sich zudem die Haltekraft von Disc und Anguss beim Zurückfahren des z-Hubs bzw. bei der Ausfahrbewegung. Mit verbrauchernahe angeordneten Vakuumsensoren für Disc und Anguss können die entsprechenden Sensorsignale nahezu zeitgleich an einen Controller weitergeleitet und der jeweils erforderliche Befehl sofort erteilt werden.

In den beiden Figuren 8a und 8b wurde die Entnahme mit einem Vakuum von 800 mbar gestartet. Das wirksame Vakuum für den Disc sowie den Anguss liegt kurz vor Beginn der Entnahme ohne Speicher (Figur 8a) bei etwas über 400 mbar, mit Zusatzspeicher (Figur 8b) bei über 500 mbar. Die Vakuumrampe VR₁ ohne Speicher ist wesentlich flacher und mit geringerem wirksamen Vakuum im Vergleich zur Vakuumrampe VR₂ mit Speicher (Figur 8b). Als Folge davon kann die Ausfahrbewegung (z-Hub) mit Speicher etwa doppelt so schnell wie ohne Speicher (Figur 8a) erfolgen.

In den Figuren 8c und 8d ist der kritische Bereich der beiden Lösungen (mit und ohne Speicher) in vergrössertem Massstab nochmals dargestellt, wobei 8c der Figur 8a und 8d der Figur 8b entspricht. Aus dem Vergleich ergibt sich, dass ohne Speicher der Druck im System bei Start-Vak.₁ von 800 mbar auf etwa 550 mbar bei Start-Übergabe₁ bei Beginn des Ansaugvorganges der Spritzgiessteile fällt. Die entsprechenden Werte mit Speicher liegen bei Start-Vak2 = 800 mbar, Start-Übergabe₂ = 770 mbar. Ebenso auffallend ist der Vergleich der beiden Vakuumrampen mit und ohne Vakuumtank bzw. Speicher. Um die Funktionssicherheit zu gewährleisten, wurde in beiden Fällen etwa eine gleiche Rampenhöhe gewählt, ohne Speicher V_{RA1} (Vakuumrampe-Anguss), V_{RD1} (Vakuumrampe Disc), mit Speicher V_{RA2} (Vakuumrampe Anguss), V_{RD2} (Vakuumrampe Disc). Der grundsätzliche Unterschied liegt in der wirksamen Vakuumhöhe am Ende der Ansaugung der Spritzgiessteile: ohne Speicher bei etwas über 600 mbar und mit Speicher über 700 mbar. Zum Zweiten ist der Zeitbedarf ohne Speicher bei ca. 100 msec, mit Speicher bei ca. 30 bis 50 msec. Es bedeuten D_{S1}-U der untere Schwellwert (ohne Speicher) und D_{S1}-O der Druckschalt-Schwellwert (ohne Speicher), ferner D_{S2}-U der untere Schwellwert mit Speicher und D_{S2}-O der Druckschalt-Schwellwert mit Speicher. Die Vorteile der neuen Lösung mit Zusatz-Vakuumtank sind damit offensichtlich. Neben den Aspekten der Betriebssicherheit ergibt sich gleichzeitig auch eine Verkürzung der Entnahmezeit, gleichsam im Sinne von sicherer, schneller und besser.

In der Figur 8d ist als Beispiel je ein Druckschaltschwellwert für den Disc wie für den Anguss eingezeichnet. Die Verhältnisse für den Disc und für den Anguss sind in mehreren Hinsichten sehr unterscheidlich, nicht zuletzt auch durch die geometrischen Abmessungen. Die neue Lösung gestattet diesem Aspekt Rechnung zu tragen, und die beiden gesondert zu steuern und zu überwachen. Bei dem eingetragenen Beispiel liegt das Systemvakuum im Zeitpunkt Start Entnahme bei 800 mbar und damit über einem geforderten Vakuumgrenzwert von 750 mbar. Der Rechner 49 errechnet bei Beginn der Entnahme die Druckschalt-Schwellwerte für den Disc mit etwa 725 mbar sowie für den Anguss mit etwa 750 mbar. Der Roboterarm 31 fährt nach Freigabe durch die Vakuumgrenzwertüberprüfung in die inzwischen geöffneten Formen ein und der Übernahekopf nähert sich den Spritzgiessteilen. Mit D_{S1}-U sowie D_{S2}-U ist der Beginn der Näherung Spritzgiessteil und Saugnäpfe markiert. Die rasche Verkleinerung des Spaltes zwischen Spritzgiessteil und Saugnapf hat zur Folge, dass sich das Vakuum in dem Saugnapf fast schlagartig aufbaut, indem der Saugnapfinnenraurn und die Vakuumleitungsstücke 45, 46 durch die Vakuumwirkung "leergesaugt" werden. Das Leersaugen kann durch optimale Dimensionierung der Vakuumleitungsstücke verkürzt werden. Nach weniger als 50 msec. ist sowohl für den Anguss wie für den Disc der Druckschaltschwellwert erreicht. Mit dem entsprechenden Schaltsignal wird die Freigabe für das Ausfahren des Entnahmeroboters gegeben. Der Druckschaltschwert wird vor jedem Entnahmezyklus bestimmt. In vielen Fällen kann es genügen, wenn ein Fixwert angenommen wird. Der Fixwert richtet sich primär nach dem momentanen Vakuum im System bzw. in dem Vakuumspeicher 61. Der grosse Vorteil der neuen Lösung liegt darin, dass der Druckschaltschwellwert jeder spezifischen Situation zugepasst werden kann. Bei unproblematischen Spritzgiessteilen kann die Vakuumpumpe verkürzt werden. Bei sehr heiklen Spritzgiessteilen kann die Sicherheit dadurch erhöht werden, dass der Druckschalt-Schwellwert möglichst nahe an das Start-Vakuum vor dem Entnahmezyklus angenommen und damit eine etwas längere Entnahmezeit in Kauf genommen wird. Die erfindungsgemässe Lösung ist ganz besonders geeignet, die laufende Erfahrung im Sinne eines lernfähigen Programmes die jeweilige Berechnung des Druckschalt-Schwellwertes für jeden spezifischen Arbeitsauftrag zu optimieren. Es kann irgend ein Wert von z.B. 1 % - 30% des Start-Vakuums bestimmt werden. Damit löst die neue Erfindung die gestellte Aufgabe sehr gut, indem eine Sicherheitsabschaltung bzw. ein Sicherheitsstop nur bei wirklicher, drohender Gefahr von Schäden besteht. Der Druckschalt-Schwellwert kann auf verschiedenste Weise vorbestimmt werden. Er kann z.B. als Fixwert rezeptartig im elektronischen Speicher des Rechners abgelegt sein, und in Bezug auf Bandbreiten des Start-Vakuums festgelegt werden. Es ist auch möglich, dass der Kunde von Fall zu Fall einen Prozentwert von 3 bis 30% am Maschinenterminal eingegeben werden. Ferner können aber auch entsprechende Vakuumrampen z.B. durch Vorgabe von Bandbreiten vorgegeben und entsprechend die Schaltfunktion für die Weiterbewegung des Entnahmeroboters ausgelöst werden. Der grosse Vorteil der neuen Lösung liegt darin, dass bei einem genügenden Start-Vakuum jeder einzelne Entnahmezyklus im Hinblick auf Zeit, Sicherheit und Ökonomie optimierbar ist, durch eine entsprechend kontrollierte Führung des Entnahmeroboters.

Die neue Lösung schlägt eine klare, untere Grenze der unteren Vakuumgrenze vor. Das Vakuum muss mindestens den entsprechenden Wert z.B. 750 mbar aufweisen, für den Freigabebefehl des Entnahmezyklusses. Es werden für den Disc wie für den Anguss ein Druckschalt-Schwellwert und damit die untere Limite für den Bereich der Freigabe der weiteren Bewegung des Entnahmeroboters festgelegt. Dabei kann der Vakuum-Ist-Wert vor Beginn, multipliziert mit einem Faktor K₁ resp. K₂ (für Disc resp. Anguss) festgelegt werden. Die Bewegungsfreigabe erfolgt erst wenn für beide der Druckschalt-Schwellwert erreicht ist. Der Druckschalt-Schwellwert ist nur die untere Grenze für die erlaubte Bereichentnahme.

Das Ziel ist dabei:
- für die Übernahme ein hohes aber nicht unnötig hohes Wirkvakuum sicherzustellen;
- der Schaltpunkt soll noch im steilen Rampenteil und doch möglichst nahe an das Vakuum im Tank liegen.
- Durch Bereitstellung eines Vorort-Vakuumspeichers werden die Vakuumschwankungen des Systems gedämpft.
- Als einfachste Methode wird der Druckschalt-Schwellwert als Prozentwert z.B. 70% bis 97% des jeweils aktuellen Vakuums im Vorort-Vakuumspeicher gewählt.

## Patentansprüche

1. Verfahren zum automatischen Entnehmen von Spritzgiessteilen, insbesondere von scheibenförmigen Spritzgiessteilen aus den offenen Formhälften mittels einem Entnahmeroboter und an einem Vakuumsystem angeschlossenen Saugnäpfen,
wobei
für die Spritzgiessteile-Entnahme auf Grund das verfügbaren Systemvakuums ein Druckschalt-Schwellwert oder ein Druckschaltprofil für das in Saugnapfnähe sich einstellende Vakuum bei der Übernahme der Spritzgiessteile durch den Entnähmeroboter bestimmt ***und der Druckschaltschwellwert bzw. das Druckschaltprofil auf** Grund des **jeweils momentanen** Unterdruckes **während jeder Spritzgiessteile- Entnahme kontinuierlich adaptiert wird.***

2. Verfahren nach Anspruch 1,
**dadurch gekennzeichnet,**
**dass** zur Entscheidung der Fortsetzung der Bewegung des Entnahmeroboters kurz vor und/oder während dem Ausfahren des Entnahmeroboters der Druckschalt-Schweilwert überprüft wird.

3. Verfahren nach Anspruch 1 oder 2,
**dadurch gekennzeichnet,**
**dass** der Druckschalt-Schwellwert über Vakuumsensormittel im Saugnapfbereich für jeden Entnahmezyklus kontrolliert und die Freigabe der Weiterbewegung des Entnahmeroboters nur bei Erreichen des Druckschaltschwellwertes bzw. des Druckschaltprofiles gegeben wird.

4. Verfahren nach einem der Ansprüche 1 bis 3,
**dadurch gekennzeichnet,**
**dass** zur Erzeugung einer steilen Vakuumrampe für die Phase der Übernahme der Spritzgiessteile durch die Saugnäpfe bzw. während der Näherung der Spritzgiessteile an die Saugnäpfe ein Vakuumspeicher in Verbrauchernähe angeschlossen ist.

5. Verfahren nach Ansprüch 4,
**dadurch gekennzeichnet,**
***dass*** ***nahe nahe an der Verbraucherstelle in einem dauernd an das Vakuumsystem angeschlossenen Vakuumtank Vakuum gespeichert wird, welches das automatische Entnehmen der Spritzgiessteile sichert.***

6. Verfahren nach einem der Ansprüche 1 bis 5,
**dadurch gekennzeichnet,**
**dass** vor jedem Entnahmezyklus auf Grund von Drucksensorwerten der Systemdruck ermittelt und die Entnahmebewegung des Entnahmeroboters nur bei Erreichen eines Vakuum-Grenzwertes im Vakuumsystem begonnen und nur bei Erreichen des Druckschalt-Schwellwertes bzw. des Druckschaltprofiles abgeschlossen wird.

7. Verfahren nach Anspruch 6,
**dadurch gekennzeichnet,**
**dass** der Druckschalt-Schwellwert oder ein Druckschaltprofil auf Grund des momentan im Vakuumtank herrschenden Druckes errechnet bzw. bestimmt und der Druckschaltschwellwert über dem Druckgrenzwert, jedoch etwa 3% - 30%, vorzugsweise 5% - 20% unter dem im Vakuumtank herrschenden Druck bei Beginn des Entnahmezyklusses festgelegt wird.

8. Verfahren nach einem der Ansprüche 1 bis 7,
**dadurch gekennzeichnet,**
**dass** die Entnahme der Spritzgiessteile, insbesondere der scheibenförmigen Teile und des Angusses, vom Maschinenrechner durch Vorgabe bzw. Errechnung sowie Kontrolle des Druckschalt-Schwellwertes einzeln überwacht und gesteuert wird.

9. Verfahren nach einem der Ansprüche 4 bis 8,
**dadurch gekennzeichnet,**
**dass** der Entnahmeroboter Disc Saugnäpfe für die scheibenförmigen Teile sowie wenigstens einen Anguss-Saugnapf aufweist, wobei alle Saugnäpfe für die Entnahme mit dem Vakuumspeicher verbunden werden.

10. Verfahren nach einem der Ansprüche 4 bis 9,
**dadurch gekennzeichnet,**
**dass** die Vakuum-Verbindungen für die Disc-Saugnäpfe sowie für den Anguss-Saugnapf durch je getrennte Leitungen mit dem Vakuumspeicher über getrennte Ventile hergestellt bzw. gesteuert werden.

11. Verfahren nach einem der Ansprüche 1 bis 10,
**dadurch gekennzeichnet,**
**dass** für den Abwurf der Discs mittels Schwerkraft gesteuert Umgebungsluft in das Vakuumleitungsstück eingespiesen wird.

12. Entnahmevorrichtung für Spritzgissteile, insbesondere für die Entnahme von scheibenförmigen Spritzgiessteilen, wie Optical Discs, aus den Formhälften mittels Steuermitteln und einem Entnahmeroboter mit Saugnäpfen, welche an ein Vakuumsystem anschliessbar sind,
**dadurch gekennzeichnet,**
**dass** das Vakuumsystem in Verbrauchernähe, insbesondere im Produktionssystem integriert wenigstens einen Vakuumspeicher bzw. Vakuumtank und Vakuumsensormittel aufweist, wobei die Saugnäpfe über ein steuerbares Ventil mit dem Vakuumtank verbindbar und die Bewegungen des Entnahmeroboters über die Vakuumsensormittel ***überwachbar sind, wobei mittels der Steuermittel ein Druckschahschwellwert bzw. ein Druckschaltproril auf Grund des jeweils herrschenden Unterdruckes während jeder Spritzgiessteile-Entnahme adaptierbar ist.***

13. Entnahmevorrichtung nach Anspruch 12,
**dadurch gekennzeichnet,**
**dass** die Saugnäpfe als Disc-Saugnäpfe ausgebildet sind, welche über ein Vakuumleitungsstück, ein steuerbares Ventil sowie eine Verbindungsleitung mit dem Vakuumtank verbindbar sind.

14. Entnahmevorrichtung nach Anspruch 12 oder 13,
**dadurch gekennzeichnet,**
**dass** der innerhalb der kreisförmig angeordneten Disc-Saugnäpfe angeordnete Anguss-Saugnapf über ein Vakuumleitungsstück und ein steuerbares Ventil sowie einer Verbindungsleitung mit dem Vakuumtank verbindbar ist.

15. Entnahmevorrichtung nach einem der Ansprüche 12 bis 14,
**dadurch gekennzeichnet,**
**dass** der Vakuumtank mit den Verbindungsleitungen sowie den Verbrauchern mit Schaltventilen und Vakuumsensorik als integrierte Baugruppen der Maschine gestaltet sind, mit einer Anschlussleitung an eine Vakuumquelle.

16. Entnahmevorrichtung nach einem der Ansprüche 12 bis 15,
**dadurch gekennzeichnet,**
**dass** in dem Vakuumleitungsstück zwischen dem steuerbaren Vakuumventil und dem Anguss-Saugnapf ein zusätzliches steuerbares Ventil für das Abblasen des Angusses mit Druckluft angeordnet ist.

17. Entnahmevorrichtung nach einem der Ansprüche 12 bis 16,
**dadurch gekennzeichnet,**
**dass** die Vakuumleitungsstücke von den Ventilen zu den Saugnäpfen im Querschnitt optimiert sind, derart, dass bei offenen Saugnäpfen die Strömung begrenzt und bei geschlossenen Saugnäpfen das maximal mögliche Vakuum schnell herstellbar ist.

18. Entnahmevorrichtung nach einem der Ansprüche 12 bis 17,
**dadurch gekennzeichnet,**
**dass** sie eine Steuereinrichtung aufweist, über Welche für jeden Zyklus die einzelnen Blas- und Saugzyklen koordiniert mit dem Formöffnen und dem Formschliessen sowie den Bewegungen des Entnahmeroboters steuerbar sind.

19. Entnahmevorrichtung nach einem der Ansprüche 12 bis 18,
**dadurch gekennzeichnet,**
**dass** sie Vakuumsensormittel aufweist zur Überwachung der Vakuumverhältnisse für die Entnahmephase im Saugnapfbereich insbesondere im Vakuurnleitungsstück sowie im Vakuumtank.

20. Entnahmevorrichtung nach einem der Ansprüche 12 bis 19,
**dadurch gekennzeichnet,**
**dass** ein Vakuumtank wenigstens 5 dm³, insbesondere etwa 10 dm³ bis 50 dm³ Fassungsvermögen aufweist, wobei vorzugsweise ein oder zwei Vakuumtanks in den Tragstrukturen der Spritzgiessmaschine angeordnet sind.

## Claims

1. Method for the automatic removal of injection-moulded parts, in particular disc-shaped injection-moulded parts, from the open mould halves by means of a removal robot and suction cups connected to a vacuum system, wherein for the removal of the injection-moulded parts, due to the available system vacuum, a pressure switch threshold value or a pressure switch profile is determined for the vacuum forming in proximity to the suction cup during the takeover of the injection-moulded parts by the removal robot, and the pressure switch threshold value or the pressure switch profile is continuously adapted due to respective momentary low pressure during each removal of the injection-moulded parts.

2. Method according to claim 1, **characterised in that** for deciding the continuation of the movement of the removal robot the pressure switch threshold value is checked shortly before and/or during the excursion of the removal robot.

3. Method according to either claim 1 or claim 2, **characterised in that** the pressure switch threshold value is monitored via vacuum sensoring means in the suction cup region for each removal cycle and the removal robot is allowed to move onward only when the pressure switch threshold value or the pressure switch profile is reached.

4. Method according to any one of claims 1 to 3, **characterised in that** for producing a steep vacuum ramp for the phase for the takeover of the injection-moulded parts by the suction cups or during the approach of the injection-moulded parts toward the suction cups a vacuum storage means is connected in proximity to the consumer.

5. Method according to claim 4, **characterised in that** a vacuum, which ensures the automatic removal of the injection-moulded parts, is stored in proximity to the consumer point in a vacuum tank which is permanently connected to the vacuum system.

6. Method according to any one of claims 1 to 5, **characterised in that** before each removal cycle the system pressure is determined on the basis of pressure sensor values and the removal movement of the removal robot is only started when a vacuum limit value is reached in the vacuum system and is only finished when the pressure switch threshold value or the pressure switch profile is reached.

7. Method according to claim 6, **characterised in that** the pressure switch threshold value or a pressure switch profile is calculated or determined on the basis of the pressure prevailing at that moment in the vacuum tank, and, at the start of the removal cycle, the pressure switch threshold value is set above the pressure limit value, but approximately 3 % to 30 %, preferably 5 % to 20 %, below the pressure prevailing in the vacuum tank.

8. Method according to any one of claims 1 to 7, **characterised in that** the removal of the injection-moulded parts, in particular the disc-shaped parts and the sprue element, is individually monitored and controlled by the machine processor by presetting or calculating as well as checking the pressure switch threshold value.

9. Method according to any one of claims 4 to 8, **characterised in that** the removal robot comprises disc suction cups for the disc-shaped parts as well as at least one sprue element suction cup, all of the suction cups being connected to the vacuum storage means for the removal.

10. Method according to any one of claims 4 to 9, **characterised in that** the vacuum connections for the disc suction cups as well as for the sprue element suction cup are produced or controlled by means of respective separate lines to the vacuum storage means, via separate valves.

11. Method according to any one of claims 1 to 10, **characterised in that**, for the discharge of the discs, which is controlled by means of gravity, ambient air is fed into the vacuum line part.

12. Removal device for injection-moulded parts, in particular for the removal of disc-shaped injection-moulded parts, such as optical discs, from the mould halves using control means and a removal robot comprising suction cups, which may be connected to a vacuum system, **characterised in that** in proximity to the consumer, in particular integrated in the production system, the vacuum system comprises at least one vacuum storage means or vacuum tank and vacuum sensoring means, wherein the suction cups may be connected to the vacuum tank via a controllable valve and the movements of the removal robot may be monitored via the vacuum sensoring means, wherein a pressure switch threshold value or a pressure switch profile may be adapted by means of the control means on the basis of the respectively prevailing low pressure during each removal of the injection-moulded parts.

13. Removal device according to claim 12, **characterised in that** the suction cups are configured as disc suction cups, which may be connected to the vacuum tank via a vacuum line part, a controllable valve as well as a connection line.

14. Removal device according to either claim 12 or claim 13, **characterised in that** the sprue element suction cup, which is arranged inside the circularly arranged disc suction cups, may be connected to the vacuum tank via a vacuum line part and a controllable valve as well as a connection line.

15. Removal device according to any one of claims 12 to 14, **characterised in that** the vacuum tank comprising the connection lines as well as the consumers comprising switching valves and vacuum sensors are configured as integrated modules of the machine, with a line connecting to a vacuum source.

16. Removal device according to any one of claims 12 to 15, **characterised in that** an additional controllable valve for blowing off the sprue element by means of compressed air is arranged in the vacuum line part between the controllable vacuum valve and the sprue element suction cup.

17. Removal device according to any one of claims 12 to 16, **characterised in that** the vacuum line parts from the valves to the suction cups are optimised in cross section such that the flow is limited when the suction cups are open and the maximum possible vacuum may quickly be produced when the suction cups are closed.

18. Removal device according to any one of claims 12 to 17, **characterised in that** they comprise a control device, via which the individual blow and suction cycles may be controlled for each cycle in coordination with the opening of the mould and the closing of the mould, as well as the movements of the removal robot.

19. Removal device according to any one of claims 12 to 18, **characterised in that** it comprises vacuum sensoring means for monitoring the vacuum conditions for the removal phase in the suction cup region, in particular in the vacuum line part, as well as in the vacuum tank.

20. Removal device according to any one of claims 12 to 19, **characterised in that** a vacuum tank has a capacity of at least 5 dm³, in particular approximately 10 dm³ to 50 dm³, one or two vacuum tanks preferably being arranged in the carrier structures of the injection-moulding machine.

## Revendications

1. Procédé de prélèvement automatique de pièces moulées par injection, notamment de pièces moulées par injection en forme de disque, à partir de demi-moules ouverts au moyen d'un robot de prélèvement et de ventouses raccordées à un système à vide,
sachant que, pour le prélèvement de pièces moulées par injection, une valeur seuil d'interruption de pression ou un profil d'interruption de pression pour le vide établi à proximité de la ventouse, lorsque les pièces moulées par injection sont prélevées par le robot de prélèvement, est définie sur la base du vide du système disponible, et la valeur seuil d'interruption de pression et/ou le profil d'interruption de pression sont adaptés en continu sur la base de la dépression respectivement momentanée pendant chaque prélèvement de pièces moulées par injection.

2. Procédé selon la revendication 1,
**caractérisé en ce que**
pour décider de poursuivre le déplacement du robot de prélèvement, la valeur seuil d'interruption de pression est vérifiée un peu avant et/ou pendant le déploiement du robot de prélèvement.

3. Procédé selon la revendication 1 ou 2,
**caractérisé en ce que**
la valeur seuil d'interruption de pression est contrôlée par des moyens formant capteur de vide dans la zone de la ventouse pour chaque cycle de prélèvement et le robot de prélèvement ne peut continuer son déplacement que lorsque la valeur seuil d'interruption de pression et/ou le profil d'interruption de pression est atteint(e).

4. Procédé selon l'une quelconque des revendications 1 à 3,
**caractérisé en ce que**
pour générer une rampe à vide escarpée pour la phase du prélèvement des pièces moulées par injection par les ventouses et/ou pendant que les pièces moulées par injection se rapprochent des ventouses, un accumulateur à vide est raccordé à proximité du récepteur.

5. Procédé selon la revendication 4,
**caractérisé en ce que**
à proximité du point de réception, un vide est stocké dans un réservoir à vide raccordé en permanence au système à vide, lequel vide garantit le prélèvement automatique des pièces moulées par injection.

6. Procédé selon l'une quelconque des revendications 1 à 5,
**caractérisé en ce que**
avant chaque cycle de prélèvement, la pression de système est déterminée sur la base des valeurs du capteur de pression et le déplacement de prélèvement du robot de prélèvement ne commence que lorsqu'une valeur limite de vide est atteinte dans le système à vide et ne s'arrête que lorsque la valeur seuil d'interruption de pression et/ou le profil d'interruption de pression est atteint.

7. Procédé selon la revendication 6,
**caractérisé en ce que**
la valeur seuil d'interruption de pression ou un profil d'interruption de pression est calculé(e) et/ou défini(e) sur la base de la pression régnant momentanément dans le réservoir de vide et la valeur seuil d'interruption de pression est déterminée au-dessus de la valeur limite de la pression, mais cependant à approximativement 3% à 30%, de préférence à 5% à 20% au-dessous de la pression régnant dans le réservoir de vide au début du cycle de prélèvement.

8. Procédé selon l'une quelconque des revendications 1 à 7,
**caractérisé en ce que**
le prélèvement des pièces moulées par injection, notamment des pièces en forme de disque et du culot d'injection, est vérifié et commandé individuellement par le calculateur de la machine en fixant et/ou en calculant ainsi qu'en contrôlant la valeur seuil d'interruption à pression.

9. Procédé selon l'une quelconque des revendications 4 à 8,
**caractérisé en ce que**
le robot de prélèvement comprend des ventouses de disque pour les pièces en forme de disque ainsi qu'au moins une ventouse de culot d'injection, toutes les ventouses étant reliées à l'accumulateur de vide pour le prélèvement.

10. Procédé selon l'une quelconque des revendications 4 à 9,
**caractérisé en ce que**
les raccordements au vide pour les ventouses de disque ainsi que pour la ventouse de culot d'injection sont établis et/ou commandés par des conduites respectivement séparées à l'accumulateur de vide par l'intermédiaire de soupapes séparées.

11. Procédé selon l'une quelconque des revendications 1 à 10,
**caractérisé en ce que**
pour éjecter les disques, l'air ambiant est amené dans l'élément de conduite de vide en étant dirigé par la gravité.

12. Dispositif de prélèvement pour les pièces moulées par injection, notamment pour le prélèvement de pièces moulées par injection en forme de disque, comme des disques optiques, à partir de demi-moules grâce à des moyens de commande et à un robot de prélèvement doté de ventouses, lesquelles peuvent être raccordées à un système à vide,
**caractérisé en ce que**
le système à vide comprend à proximité du récepteur, notamment intégré dans le système de production, au moins un accumulateur de vide et/ou un réservoir de vide et des moyens formant capteur de vide, les ventouses pouvant être reliées par une soupape commandable au réservoir de vide et les déplacements du robot de prélèvement pouvant être vérifiés par les moyens formant capteur de vide, une valeur seuil d'interruption de pression et/ou un profil d'interruption de pression, grâce aux moyens de commande, pouvant être adaptés sur la base de la dépression régnant respectivement pendant chaque prélèvement de pièces moulées par injection.

13. Dispositif de prélèvement selon la revendication 12,
**caractérisé en ce que**
les ventouses sont conçues comme des ventouses de disque, lesquelles peuvent être reliées au réservoir de vide par un élément de conduite de vide, une soupape commandable ainsi qu'une conduite de raccordement.

14. Dispositif de prélèvement selon la revendication 12 ou 13,
**caractérisé en ce que**
la ventouse de culot d'injection disposée à l'intérieur des ventouses de disque disposées de manière circulaire peut être reliée au réservoir de vide par un élément de conduite de vide et une soupape commandable ainsi qu'une conduite de raccordement.

15. Dispositif de prélèvement selon l'une quelconque des revendications 12 à 14,
**caractérisé en ce que**
le réservoir de vide avec les conduites de raccordement ainsi que les récepteurs dotés de soupapes de commande et de l'analyse sensorielle de vide sont configurés comme des sous-groupes intégrés de la machine, avec une conduite de raccordement à une source de vide.

16. Dispositif de prélèvement selon l'une quelconque des revendications 12 à 15,
**caractérisé en ce que**
une soupape commandable additionnelle pour vidanger le culot d'injection avec de l'air comprimé est disposée dans l'élément de conduite de vide entre la soupape de contrôle de vide commandable et la ventouse de culot d'injection.

17. Dispositif de prélèvement selon l'une quelconque des revendications 12 à 16,
**caractérisé en ce que**
les éléments de conduite de vide des soupapes aux ventouses sont optimisés en section transversale, de telle sorte que, lorsque les ventouses sont ouvertes, l'écoulement est limité et lorsque les ventouses sont fermées, le plus grand vide possible peut être rapidement établi.

18. Dispositif de prélèvement selon l'une quelconque des revendications 12 à 17,
**caractérisé en ce**
**qu'**il comprend un système de commande par l'intermédiaire duquel pour chaque cycle, les cycles de soufflage et d'aspiration individuels sont commandés de façon coordonnée à l'ouverture du moule et à la fermeture du moule ainsi qu'aux déplacements du robot de prélèvement.

19. Dispositif de prélèvement selon l'une quelconques des revendications 12 à 18,
**caractérisé en ce**
**qu'**il comprend des moyens de capteur de vide destinés à surveiller les rapports de vide pour la phase de prélèvement dans la zone de la ventouse, notamment dans l'élément de conduite de vide ainsi que dans le réservoir de vide.

20. Dispositif de prélèvement selon l'une quelconque des revendications 12 à 19,
**caractérisé en ce**
**qu'**un réservoir de vide comprend une capacité d'au moins 5 dm³ notamment d'approximativement 10 dm³ à 50 dm³ un ou deux réservoir(s) de vide étant de préférence disposé(s) dans les structures porteuses de la machine de moulage par injection.
